Europäisches Patentamt

European Patent Office

Office européen des brevets

(11) Publication number: **0 092 979**
**B1**

(12) **EUROPEAN PATENT SPECIFICATION**

(45) Date of publication of patent specification: **08.08.90**

(21) Application number: **83302271.8**

(22) Date of filing: **21.04.83**

(60) Divisional application 86110290 filed on 25.07.86.

(51) Int. Cl.⁵: **B 65 D 1/02,** B 29 C 49/08,
B 29 D 9/00

(54) Bottle-shaped container.

(30) Priority: **22.04.82 JP 67780/82**

(43) Date of publication of application:
**02.11.83 Bulletin 83/44**

(45) Publication of the grant of the patent:
**08.08.90 Bulletin 90/32**

(84) Designated Contracting States:
**CH DE FR GB IT LI NL**

(56) References cited:
DE-A-1 545 013
DE-A-2 410 882
DE-A-2 537 491
FR-A-2 132 395
FR-A-2 335 407
GB-A-1 169 469
GB-A-1 341 848

PATENTS ABSTRACTS OF JAPAN, vol. 7, no. 68
(M-201)1213r, 19th March 1983, page 156,
Tokyo, JP

(73) Proprietor: **Yoshino Kogyosho CO., LTD.**
**No 3-2-6, Ojima 3-chome, Koto-ku**
**Tokyo 136 (JP)**

(72) Inventor: **Kushida, Hideo**
**10-22-19, Hachiyodai Kita**
**Yachiyo-Shi Chiba-Ken (JP)**
Inventor: **Takahashi, Sumio**
**No. 556-33 Joza**
**Sakura-Shi Chiba-Ken (JP)**
Inventor: **Koshio, Syuichi**
**No. 3-2-6, Ojima**
**Koto-Ku Tokyo (JP)**

(74) Representative: **Heath, Derek James et al**
**BROMHEAD & CO. 19 Buckingham Street**
**London WC2N 6EF (GB)**

Courier Press, Leamington Spa, England.

## Description

This invention relates to a hollow blow-molded bottle-shaped container of a biaxially oriented polyethylene terephthalate resin.

A polyethylene terephthalate resin, hereinafter referred to as "PET", has a variety of excellent properties and characteristics. In order to effectively perform the excellent properties and characteristics of the PET, a bottle-shaped container of the PET is mostly biaxially oriented without exception.

Although the conventional hollow blow-molded bottle-shaped container of the biaxially oriented PET effectively performs a variety of properties and characteristics as described above, the container does not always sufficiently exhibit a gas barrier property.

Containers having a gas barrier property are known from WO—A—81/00230 and WO—A—81/00231, but these containers are not bottle-shaped, nor do they incorporate PET or PET-based materials.

In order to supplement the insufficient gas barrier property of the bottle-shaped container of the PET, it is theoretically possible to provide a hollow blow-molded bottle-shaped container of a biaxially oriented PET having a multilayer structure layer including in combination a layer formed of a synthetic resin material incorporating excellent gas barrier property and a layer formed of the PET. However, the adhering strength between the layer formed of a material having an excellent gas barrier property and the layer formed of the PET is weak or insufficient because of the difference of cooling shrinkage factors at the molding time between the layer formed of the material having excellent gas barrier property and the layer formed of the PET and of insufficient compatibility, bonding strength and reaction strength between the material having excellent gas barrier property and the PET. Thus, the mechanical strength of the bottle-shaped container is not only insufficient, but also gas escapes from the contents of the container (such as, for example, a carbon dioxide gas), and this gas accumulates between the layer formed of the material having excellent gas barrier property and the intermediate layer formed of the PET.

In other words, when a preformed injection molding is covered with a surface layer in which both inner and outer surfaces of an intermediate layer formed of a material having high gas barrier property have been covered with the PET, the surface layer and the intermediate layer are generally bonded relatively strongly in the state of the preformed injection molded state. However, when the preformed moulding is further blow-molded to biaxially orient it into a bottle-shaped container, the bonding strength between the surface layer and the intermediate layer becomes extremely weak due to the difference of the degrees of orientations between the surface layer and the intermediate layer of the bottle-shaped container.

Accordingly, the carbon dioxide gas which has penetrated into the inner surface layer readily accumulates between the inner surface layer and the intermediate layer as described above. In this manner an exfoliation between the inner surface layer and the intermediate layer not only occurs over the entire bottle-shaped container, but also the body of the container tends to swell considerably. As the body of the container has to endure the internal pressure thus produced merely by the outer surface layer and the intermediate layer, a remarkable deterioration takes place in the external appearance of the bottle-shaped container as merchandise.

A resin material which has excellent gas barrier property generally has a drawback such that the material is whitened in contact with water content. Whan a gap is formed between the inner surface layer and the intermediate layer of the bottle-shaped container as described above, the intermediate layer is whitened due to the water content which penetrates even in a very small amount into the gap formed between the inner surface layer and the intermediate layer, thereby causing a difficulty in the loss of a transparency of the bottle-shaped container.

Accordingly, an aim of the present invention is to provide a method of making a hollow blow-molded bottle-shaped container of a biaxially-oriented polyethylene terephthalate resin which can eliminate all the aforementioned drawbacks and disadvantages of prior bottle-shaped containers and which can maintain extremely high bonding strength between a surface layer and an intermediate layer of the container while retaining a gas barrier property.

Another aim of the invention is to provide a method of making a hollow blow-molded bottle-shaped container of a biaxially-oriented polyethylene terephthalate resin which does not cause an exfoliation between the surface layer and the intermediate layer.

Yet another aim of the invention is to provide a method of making a hollow blow-molded bottle-shaped container of a biaxially oriented polyethylene terephthalate resin which can incorporate extremely high mechanical strength.

Still another aim of the invention is to provide a method of making a hollow bottle-shaped container of a biaxially oriented polyethylene terephthalate resin which permits simple control of the temperature at the blow-molding time.

Still another aim of the invention is to provide a method of making a hollow bottle-shaped container of a biaxially-oriented polyethylene terephthalate resin which can maintain high transparency even with the surface layers and the intermediate layer.

With these aims in view, the invention is directed to a method as claimed in claim 1 of the appended claims.

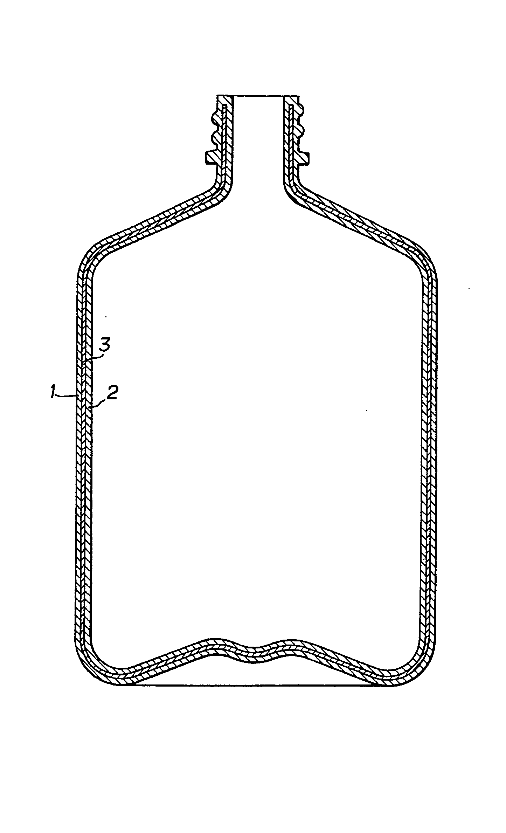

The features of the invention will be apparent from a reading of the following description of the accompanying drawing which is a cross-section through a preferred embodiment of a hollow bottle-shaped container of a biaxially oriented PET according to the present invention.

A hollow blow-molded bottle-shaped container having an excellent gas barrier property of a biaxially oriented mixture resin material without a mutlilayer structure will be first described.

This bottle-shaped container is blow-molded with biaxial orientation from a mixture resin material which includes a PET and a xylene group-containing polyamide resin. The mixture resin material contains 5 to 30% by weight of xylene group-containing polyamide resin to the PET.

The gas barrier property of the bottle-shaped container thus prepared is performed by the operation of the xylene group-containing polyamide resin mixed at the ratio of 5 to 30% by weight to the PET. The higher the mixture ratio of the xylene group-containing polyamide resin to the PET is within this range, the higher the gas barrier property of the bottle-shaped container becomes.

This xylene group-containing polyamide resin is one of the synthetic resin materials having the highest gas barrier property. Io also has excellent physical property maintaining resistance against the contents contained in the bottle-shaped container and another physical property similar to that of the PET at the molding temperature.

If the mixture ratio of the xylene group-containing polyamide resin is, however, excessively high such as greater than 30% by weight to the PET, the wall structure of the bottle-shaped container becomes a laminated foil structure, thereby causing a trend of an exfoliation occurring between the foil layers of the bottle-shaped container. Thus, the mechanical strength such as the wear resistance and the internal pressure resistance against the contents contained in the container abruptly deteriorate, and the moldability of the bottle-shaped container is aggravated.

Therefore, when a liquid is hermetically contained in a blow-molded bottle-shaped container which is not required for high gas barrier property, it is preferred to mold the bottle-shaped container with a mixture resin material which is mixed with approximately 5 to 10% by weight of the xylene group-containing polyamide resin to the PET. On the other hand, when a bottle-shaped liquid-containing container required for high gas barrier property is blow-molded, it is preferred to mold the bottle-shaped container with a mixture resin material which is mixed with the xylene group-containing polyamide resin of as high as possible within 30% by weight to the PET for not reducing the mechanical strength of the wall of the bottle-shaped container to be blow-molded.

An example of the measured values relative to the gas barrier property of the bottle-shaped container will be listed below.

When a bottle-shaped container having 0.45 mm of wall thickness of the body is molded with only 37 g of the PET, the penetrated quantity of oxygen through the bottle-shaped container was 0.0180 cc per day. When a bottle-shaped container thus molded with a mixture resin material which was mixed with 20% by weight of xylene group-containing polyamide resin to the PET, the penetrated quantity of oxygen through the bottle-shaped container was 0.0001 cc per day. It was clear that the bottle-shaped container molded only with the mixture resin material which was thus mixed with the xylene group-containing polyamide resin exhibited a very high gas barrier property.

When the penetrated quantities of carbon dioxide gas of both the bottle-shaped containers thus molded were measured under the pressurized state with the conditions of the same bottle-shaped containers only with the PET and with the mixture resin material as above, the carbon dioxide gas content in the bottle-shaped container was reduced by 23.3% in the case when the bottle-shaped container molded only with the PET was allowed to stand for 60 days at an atmospheric temperature of 4°C. On the other hand, the carbon dioxide gas content in the bottle-shaped container was reduced only by 14.8% in the case of the bottle-shaped container molded with the mixture resin material which contains 20% by weight of xylene group-containing polyamide resin to the PET when the bottle-shaped container thus molded was allowed to stand for 60 days at an atmospheric temperature of 4°C.

From the above experiments, it became clear that the bottle-shaped container thus molded with the above mixture resin material provided high gas barrier property even to the content of carbon dioxide gas in the bottle-shaped container.

With respect to the reasons that the bottle-shaped container of the invention thus molded exhibits high gas barrier property as described above, a variety of factors can be considered as follows: From the fact that, when the mixture ratio of the xylene group-containing polyamide resin to the PET is excessively increased, it is considered that the wall structure of the bottle-shaped container thus molded is progressively converted into laminated foil structure so that an exfoliation between the laminated foils tends to occur, the xylene group-containing polyamide resin mixed with the PET acts to arrange the molecular array of the PET in multilayer foils and to strengthen the bonding between the molecules of the PET forming the respective layers, thereby forming the wall structure of the bottle-shaped container in a multilayer structure, with the result that the high gas barrier property can be performed.

As described above, the xylene group-containing polyamide resin serves to arrange the molecules of the PET in laminar state and to strengthen the bonding between the molecules of the PET, but also to weaken the bonding strength between the molecules forming the respective layers and hence the molecules between the layer. Accordingly, when the mixture ratio of the xylene group-containing polyamide resin is excessively large, as exfoliation between the layers of the bottle-shaped container tends to occur, thereby reducing the mechanical strength of the bottle-shaped container, and since the respective layers of the bottle-shaped container are molded along the orienting direction of the blow-molding, the moldability of the bottle-shaped container is aggravated.

A bottle-shaped container molded with a mixture resin material which is mixed with the xylene group-containing polyamide resin in the PET in a multilayer structure layer is shown in the accompanying drawing.

The bottle-shaped container shown therein is formed with inner and outer surface layers 1 and 2 formed on the overall surfaces including both inner and outer surfaces of the bottle-shaped container, and with an intermediate layer 3 of the state covered on both the surface layers 1 and 2 in a multilayer wall structure. The surface layers 1 and 2 are formed of the PET, and the intermediate layer 3 is formed of a mixture resin material of the PET and the xylene group-containing polyamide resin.

The mixture ratio of the xylene group-containing polyamide resin to the PET forming the above intermediate layer 3 is in a range of 5 to 50% by weight of the xylene group-containing polyamide resin to the PET, and preferably 10 to 30% with 20% being the best value. In the case of this bottle-shaped container with the multilayer wall structure, the mixture ratio of the xylene group-containing polyamide resin can be increased as compared with the bottle-shaped container with a single layer formed of the above synthetic resin since the inner and outer surface layers of the bottle-shaped container are covered with the PET.

According to experiments, it was confirmed that the penetrated quantity of oxygen gas into the bottle-shaped container molded with the material which was mixed with 20% by weight of the xylene group-containing polyamide resin could be reduced to 1/10 of that of the bottle-shaped container molded only with the PET single layer, and the penetrated quantity of carbon dioxide gas thereof could be reduced to 1/2 of the latter bottle-shaped container.

Molding of a bottle-shaped container with the above multilayer wall structure can be carried out by a variety of processes. Generally, it is perferred that a preformed injection molding of a bottomed cylindrical shape with a wall structure having first layers to become the surface layers 1 and 2 and a second layer to become the intermediate layer 3 is injection-molded by a sandwich molding method and the preformed parison thus molded is then blow-molded by a biaxial orientation into a bottle-shaped container.

When the preformed molding is injection-molded by the sandwich molding method, the thickness of the intermediate layer 3 can be arbitrarily controlled and set by setting suitably the viscosity of the resin material to form the intermediate layer 3 to the PET to form the surface layer 1. However, it is advantageous from the point of improving the moldability of the preformed piece to increase the viscosity of the resin material to form the intermediate layer 3 so that it is greater than that of the PET to form the surface layers 1 and 2.

According to the present invention as described above, the bottle-shaped container has the surface layers 1 and 2, and the intermediate layer 3, the surface layers 1 and 2 are formed of the PET, and the intermediate layer 3 is formed of the mixture resin material which is mixed with the xylene group-containing polyamide resin in the PET. Therefore, since the PET is contained in both the surfaces layers 1, 2 and the intermediate layer 3, the surface layers 1, 2 and the intermediate layer 3 can be integrally fusion-bonded, whereby exfoliation between the surface layers and the intermediate layer no longer occurs.

Since the molding temperatures of the PET and the xylene group-containing polyamide resin are extremely similar, the bottle-shaped container with the surface layers and the intermediate layer can be preferably molded.

Further, since the PET and the xylene group-containing polyamide resin forming the intermediate layer 3 are merely mixed, the physical properties of the xylene group-containing polyamide resin are not varied, with the result that the intermediate layer 3 can exhibit very high gas barrier property due to the presence of the xylene group-containing polyamide resin.

As described above, the bottle-shaped container with the multilayer wall structure thus constructed exhibits very high gas barrier property and extremely high bonding strength between the surface layers and the intermediate layer. Therefore, mechanical strength of the bottle-shaped container of the invention can be enhanced. Even if the layers of the bottle-shaped container employs different resin materials, the temperature of molding the bottle-shaped container can be simply controlled. Since the xylene group-containing polyamide resin has relatively high transparency, the bottle-shaped container having high transparency can be provided.

**Claims**

1. A method of making a hollow multi-layer bottle-shaped container having a layer (1 or 2) formed of a biaxially-orientated polyethylene terephthalate resin and another layer (3) formed of a synthetic resin material which has gas barrier properties to reduce the leakage of fluid from the container, the two layers being moulded into each other so as to form a strong bond between them in an injection-moulding step for the production of a preformed injection-moulded parison of generally cylindrical wall shape, whereafter the parison is blow-moulded to produce a biaxially-orientated bottle-shaped container, characterised in that the layer (3) of synthetic resin material is sandwiched between two layers (1, 2) of biaxially-orientated polyethylene terephthalate resin and that, to prevent any substantial weakening of the bond between the respective layers during the blow-moulding step, the intermediate layer (3) comprises a mixture of polyethylene terephthalate resin and 5 to 50% by weight of a xylene derivative polyamide resin.

2. A method according to claim 1, characterised in that the intermediate layer (3) of polyethylene terephthalate resin and xylene derivative polyamide resin is injection-moulded by a sandwich moulding method between the outer and inner layers (1 and 2) of polyethylene terephthalate resin.

3. A method according to claim 1 or claim 2, characterised in that the intermediate layer (3) comprises 10 to 30% by weight of a xylene derivative polyamide resin.

4. A method according to any one of claims 1—3, characterised in that the intermediate layer (3) comprises about 20% by weight of a xylene derivative polyamide resin.

**Patentansprüche**

1. Verfahren zur Herstellung eines hohlen, mehrschichtigen flaschenförmigen Behälters mit einer Schicht (1 oder 2), gebildet aus einem biaxial orientierten Polyethylenterephthalatharz und einer anderen Schicht (3), gebildet aus einem synthetischen Harzmaterial, welches Gaszurückhaltungseigenschaften hat, um dadurch das Auslaufen von Flüssigkeit aus dem Behälter zu vermindern, wobei die beiden Schichten so aufeinander in einer Spritzgußverformungsstufe geformt sind, daß eine starke Bindung zwischen ihnen ausgebildet ist, unter Ausbildung eines Vorformlings mit einer im allgemeinen zylindrischen Wandform, worauf dann der Vorformling unter Ausbildung eines biaxial orientierten flaschenförmigen Behälters blasverformt wird, dadurch gekennzeichnet, daß die Schicht (3) des synthetischen Harzmaterials zwischen zwei Schichten (1, 2) von biaxial orientiertem Terephthalatharz eingeschlossen ist, und daß, um jegliche wesentliche Schwächung der Bindung zwischen den jeweiligen Schichten während der Blasverformungsstufe zu verhindern, die Zwischenschicht (3) eine Mischung aus Polyethylenterephthalatharz und 5 bis 50 Gew.% eines Xylolderivat-Polyamidharzes ist.

2. Verfahren gemäß Anspruch 1, dadurch gekennzeichnet, daß die Zwischenschicht (3) aus Polyethylenterephthalatharz und Xylolderivat-Polyamidharz mittels einer Sandwich-Verformungsmethode zwischen den äußeren und inneren Schichten (1 und 2) aus Polyethylenterephthalatharz spritzverformt wird.

3. Verfahren gemäß einem der Ansprüche 1 oder 2, dadurch gekennzeichnet, daß die Zwischenschicht (3) 10 bis 30 Gew.-% eines Xylolderivat-Polyamidharzes umfaßt.

4. Verfahren gemäß einem der Ansprüche 1 bis 3, dadurch gekennzeichnet, daß die Zwischenschicht (3) etwa 20 Gew.-% des Xylolderivat-Polyamidharzes umfaßt.

**Revendications**

1. Procédé de production d'un récipient creux multicouche, en forme de bouteille, comprenant une couche (1 ou 2) formée d'une résine de téréphtalate de polyéthylène à orientation biaxiale et une autre couche (3) formée d'une résine synthétique qui possède des propriétés d'étanchéité vis-à-vis des gaz pour réduire la perte de fluide du récipient, les deux couches étant moulées l'une sur l'autre de manière à former entre elles une liaison résistante dans une étape de moulage par injection pour la production d'une paraison performée moulée par injection, à paroi de forme généralement cylindrique, la paraison étant ensuite moulée par soufflage pour produire un récipient en forme de bouteille, à orientation biaxiale, caractérisé en ce que la couche (3) de résine synthétique est intercalée entre les deux couches (1, 2) de résine de téréphtalate de polyéthylène à orientation biaxiale, et, pour éviter tout affaiblissement notable de la liaison entre les couches respectives au cours de l'étape de moulage par soufflage, la couche intermédiaire (3) consiste en un mélange de résine de téréphtalate de polyéthylène et de 5 à 50% en poids d'une résine de polyamide dérivée du xylène.

2. Procédé suivant la revendication 1, caractérisé en ce que la couche intermédiaire (3) de résine de téréphtalate de polyéthylène et de résine de polyamide dérivée de xylène est moulée par injection par un procédé de moulage en sandwich, entre les couches extérieure et intérieure (1 et 2) de résine de téréphtalate de polyethylène.

3. Procédé suivant la revendication 1 ou la revendication 2, caractérisé en ce que la couche intermédiaire (3) comprend 10 à 30% en poids d'une résine de polyamide dérivée du xylène.

4. Procédé suivant l'une quelconque des revendications 1 à 3, caractérisé en ce que la couche intermédiaire (3) comprend environ 20% en poids de résine de polyamide dérivée du xylène.

EP  0 092 979  B1